# EUROPÄISCHE PATENTANMELDUNG

(11) **EP 0 922 978 A2**
(43) Veröffentlichungstag der Anmeldung: **16.06.1999**
(21) Anmeldenummer: 98115497.4
(22) Anmeldetag: 17.08.1998
(51) Int. Cl.: G02B 6/44

(54) **Einsatz für Lichtwellenleiter-Anschlüsse in einer Unterflurdose**

(30) Priorität: 09.12.1997 DE 19754609
(71) Anmelder: RXS Kabelgarnituren Gesellschaft mit beschränkter Haftung, 58093 Hagen (DE)
(72) Erfinder: Lapp, Oliver, 42287 Wuppertal (DE)
(74) Vertreter: Epping, Wilhelm, Dr.-Ing.

(57) **Zusammenfassung**

Bei der Erfindung handelt es sich um einen Einsatz für Lichtwellenleiter-Anschlüsse in einer Gerätebaueinheit, die in einer Unterflurdose eines Unterflursystems angeordnet ist. Der Einsatz besteht aus einer mehrfach gewinkelten Einsatzplatte (8), auf der in einem schräg gestellten Kupplungsaufnahmebereich (11) eine Lichtwellenleiter-Kupplung angeordnet ist. Durch die Winkelstellung ist ein problemloser Zugang für Stecker möglich. Weiter ist eine Abwinkelung zur Mittelachse (M) vorgenommen, so daß ein geradliniger Verlauf der Lichtwellenleiter von der Kabelabfangvorrichtung (19) bis zu den Kabelauslässen (7) gesichert ist.

## Beschreibung

Die Erfindung betrifft einen Einsatz für Lichtwellenleiter-Anschlüsse in einer Gerätebaueinheit, die in einer Unterflurdose eines Unterflursystems angeordnet ist.

Es sind estrich-überdeckte Unterflursysteme bekannt, bei denen Kanäle mit entsprechenden Anschlußdosen, Zapfsäulen oder Gerätebaueinheiten für die Aufnahme verschiedener Anschlußeinheiten im Fußboden von Gebäuden verlegt sind. So werden zum Beispiel für Kupferleitungen Steckdosen eingesetzt, um für die entsprechenden Geräte einen Stromversorgungsanschluß herzustellen. Auch Fernmelde- oder Informationsleitungen werden in ähnlicher Weise von verdeckten Kabelsystemen entkoppelt oder eingespeist. So wurden bisher auch Anschlüsse für Lichtwellenleiter mit Anschlußdosen hergestellt, wobei diese eigentlich für Brüstungskanäle und Aufputzmontage benutzt worden sind.

Für vorliegende Erfindung stellt sich die Aufgabe, einen Einsatz für Lichtwellenleiter-Anschlüsse in Unterflursystemen zu finden, bei dem den speziellen Eigenschaften der Lichtwellenleiter Rechnung getragen wird, insbesondere daß die Zugänglichkeit bei möglichst geringer Biegung der Lichtwellenleiter verbessert wird. Die gestellte Aufgabe wird mit einem Einsatz der eingangs erläuterten Art dadurch gelöst, daß eine Lichtwellenleiter-Kupplung für Lichtwellenleiter-Stecker auf einer mehrfach abgewinkelten Einsatzplatte angeordnet ist, daß die beiden Endplattenbereiche in einer Ebene verlaufen, mit Bohrungen zur Befestigung in einem Geräteträger der Gerätebaueinheit und mit Sichtfensterausschnitten versehen sind, daß anschließend an jedem Endplattenbereich je eine Ausgleichsabwinkelung angesetzt ist und daß zwischen den beiden Ausgleichsabwinkelungen ein Kupplungsaufnahmebereich mit einem Ausschnitt für den Einsatz der Lichtwellenleiter-Kupplung unter einem Winkel zu den Endplattenbereichen so abgewinkelt ist, daß die Achse der Lichtwellenleiter-Kupplung schräg nach oben aus der Gerätebaueinheit verläuft.

Vorteile an der Erfindung gegenüber dem Stand der Technik sind in erster Linie darin zu sehen, daß eine Einsatzplatte für eine Geräteeinheit einer Unterflurdose so konzipiert ist, daß die Montage von Steckereinheiten an dem im Unterflursystem verlegten Lichtwellenleiter-Kabel erleichtert wird. Das bedeutet, daß die Lichtwellenleiter-Enden des Lichtwellenleiter-Kabels in der Gerätebaueinheit leicht zugänglich sind , mühelos mit Steckereinheiten versehen werden können, die dann vor der Montage der Einsatzplatte in die Lichtwellenleiter-Kupplung eingeführt werden. Nach der Montage der Einsatzplatte ist dann eine einfache Betätigung der Kabelabfangvorrichtung möglich. Weiterhin ist durch entsprechende Winkelgestaltung der Einsatzplatte der Einbau einer Lichtwellenleiter-Kupplung so angelegt, daß auch das Einführen der mit Steckern versehenen Lichtwellenleiter-Anschlußleitungen von oben her in die Lichtwellenleiter-Kupplung übersichtlich, leicht zugänglich, und ohne gefährdende Biegungen erfolgen kann. Weiterhin wird durch zur Mittellinie schräg verlaufende Winkelkanten der Einsatzplatte gewährleistet, daß die Einführung des Lichtwellenleiter-Kabels in Fortsetzung der über die Lichtwellenleiter-Kupplung angeschlossenen Lichtwellenleiter-Anschlußleitungen zu den zugänglichen Kabelauslässen ebenfalls möglichst biegungsfrei erfolgt. Die Einsatzplatte ist so gestaltet, daß an sich bekannte Kupplungssysteme eingesetzt werden können, wie zum Beispiel die Typen ST, Simplex SC/E 2000, Duplex SC und Duplex E 2000 für Singlemode- und Multimode-Übertragungstechnik. In eine an sich bekannte Unterflurdose wird eine Gerätebaueinheit eingesetzt, in der ein Geräteträger zur Aufnahme der Einsatzplatte gemäß der Erfindung angeordnet ist. Bei der Montage des Lichtwellenleiter-Anschlusses mit einem Einsatz gemäß der Erfindung wird zunächst das im Unterflurkanal verlegte Lichtwellenleiter-Kabel durch eine Kabelabfangvorrichtung, die im Geräteträger angeordnet ist, eingeführt. Anschießend wird das Lichtwellenleiter-Kabel vom Kabelmantel abgesetzt und die Lichtwellenleiter-Fasern werden mit Lichtwellenleiter-Steckern versehen. Dann wird die Lichtwellenleiter-Kupplung im Ausschnitt des abgewinkelten Kupplungsaufnahmebereiches der Einsatzplatte befestigt, wobei eine Kupplungsseite unterhalb der Einsatzplatte zur Kabeleinführung und die zweite Kupplungs-Seite nach oben zum Anschließen der Lichtwellenleiter-Anschlußkabel weisen. Nachdem die Lichtwellenleiter-Stecker des verlegten Lichtwellenleiter-Kabels in die Lichtwellenleiter-Kupplung eingesteckt worden sind, wird die Einsatzplatte auf den Geräteträger gesetzt und befestigt. Dabei kann in einfacher Weise das zuvor für die Montage aus dem Kabelkanal herausgezogene Lichtwellenleiter-Kabel wieder dorthin zurückgeschoben werden. Durch ein Sichtfenster kann dieser Vorgang und die Ausrichtung der Lichtwellenleiter-Fasern auf möglichst geraden Verlauf überprüft werden. Nach der Überprüfung kann die Kabelabfangvorrichtung von oben her aktiviert und das Sichtfenster mit einem Stopfen verschlossen werden.

Die Abwinkelungen der Einsatzplatte sind, wie bereits angesprochen wurde, so gewählt, daß zwischen dem Kabeleinlaß und dem Kabelauslaß innerhalb der Gerätebaueinheit ein möglichst gerader Verlauf der Lichtwellenleiter garantiert ist. Weiterhin ist durch eine Abwinkelung erreicht, daß der Kupplungsaufnahmebereich der Einsatzplatte so schräg gestellt ist, daß ein einfaches Ein- und Auskuppeln der Lichtwellenleiter-Stecker der Lichtwellenleiter-Anschlußkabel ermöglicht wird. Durch die schräggestellte Abwinkelung des Kupplungsaufnahmebereiches wird gewährleistet, daß eine Ausrichtung zwischen der Kabeleinführung für das im Unterflursystem verlegte Lichtwellenleiter-Kabel und den Kabelauslässen für die Lichtwellenleiter-Anschlußkabel erfolgt.

Außerdem ist der Aufbau des Einsatzes völlig symmetrisch, so daß durch Wenden um 180° um die Querachse, je nach Lage der Kabelabfangvorrichtung, der Kabeleinführung und des Kabelauslasses eine entsprechende Anpassung auf das Unterflursystem erfolgen kann.

Die Erfindung wird nun anhand von sechs Figuren näher erläutert:
- Figur 1: zeigt eine an sich bekannte Gerätebaueinheit zum Einbau in einer Unterflurdose eines Unterflursystems.
- Figur 2: zeigt die Einsatzplatte des erfindungsgemäßen Einsatzes in perspektivischer Ansicht.
- Figur 3: zeigt einen Querschnitt durch die Einsatzplatte.
- Figur 4: zeigt eine Draufsicht auf die Einsatzplatte.
- Figur 5: zeigt den in die Geräteeinheit eingesetzten Einsatz in perspektivischer Ansicht.
- Figur 6: zeigt den in der Gerätebaueinheit eingesetzten Einsatz in einer Draufsicht.

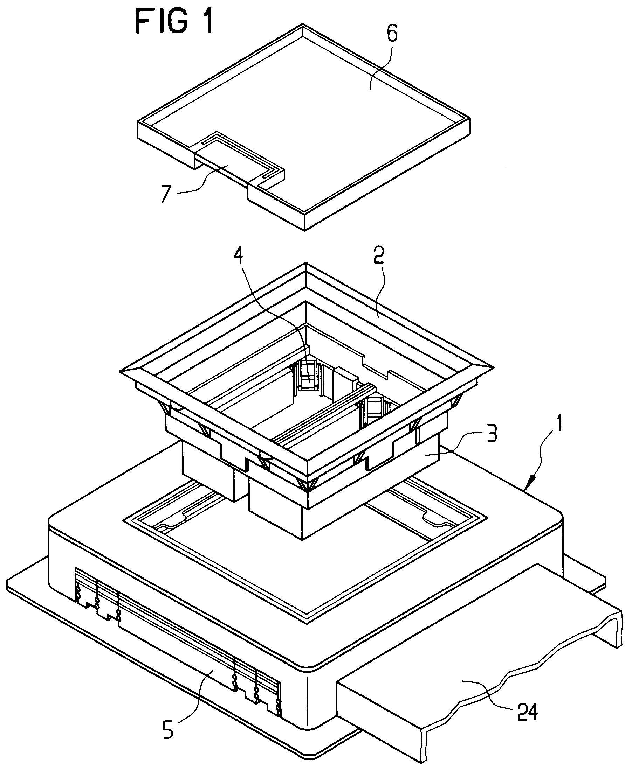

Figur 1 zeigt Einzelheiten eines an sich bekannten Unterflursystems, das estrichüberdeckt in Gebäuden eingesetzt wird. Es setzt sich zusammen aus einzelnen Kanälen 24, in denen die Kabel geführt werden. An bestimmten Stellen werden diese Kanäle 24 über ausbrechbare Eingänge 5 in Unterflurdosen 1 eingesetzt, so daß dort der Zugang zu den verlegten Kabeln gegeben ist. In einer solchen Unterflurdose 1 wird eine Gerätebaueinheit 2 eingesetzt, an der Geräteträger 3 angesetzt sind. In diese Geräteträger 3 werden die entsprechenden Einsätze befestigt, so auch zum Beispiel ein erfindungsgemäßer Einsatz für Lichtwellenleiter-Anschlüsse. Die Kabel werden in die Gerätebaueinheit 2 über Kabeleinführungen 4 zugeführt. Die gesamte Einheit wird nach der Montage mit einem trittsicheren Deckel 6 verschlossen, der ausbrechbare Kabelauslässe 7 aufweist.

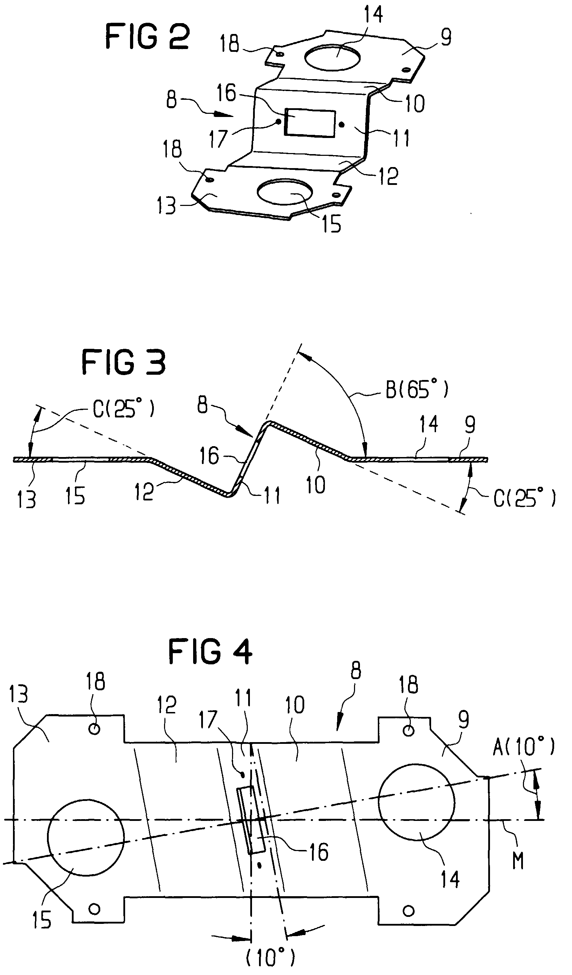

Figur 2 vermittelt in perspektivischer Ansicht die Einsatzplatte 8 eines erfindungsgemäßen Einsatzes für Lichtwellenleiter-Anschlüsse in einer Geräteeinheit 2 nach Figur 1. Daraus ist ersichtlich, daß die Einsatzplatte 8 aus zwei Endplattenbereichen 9 und 13, zwei Ausgleichsabwinkelungen 10 und 12 und einem Kupplungsaufnahmebereich 11 besteht. Die beiden Endplattenbereiche 9 und 13 liegen in der gleichen Ebene, während die Ausgleichsabwinkelungen 10 und 12 so abgebogen sind, daß der Kupplungsaufnahmebereich 11 schräg so verläuft, daß die später einzusetzende Lichtwellenleiter-Kupplung für die Aufnahme der Lichtwellenleiter-Stecker besser zugänglich ist, wie in den nächsten Figuren näher erläutert wird. Außerdem sind in den Endplattenbereichen 9 und 13 Sichtfenster 14 und 15 vorgesehen, durch die die unterhalb der Einsatzplatte 8 verlaufenden Kabel bzw. Lichtwellenleiter beobachtet werden können. In den Endplattenbereichen 9 und 13 sind Bohrungen 18 zum Befestigen an dem Geräteträger angeordnet. Die Bohrungen 17 in dem Kupplungsaufnahmebereich 11 dienen zur Befestigung der Lichtwellenleiter-Kupplung im Ausschnitt 16.

Die Figur 3 vermittelt die Abwinkelungen in einem Schnittbild der Einsatzplatte 8, woraus hervorgeht, daß die beiden Endplattenbereiche 9 und 13 in der gleichen Ebene liegen. Die beiden Ausgleichsabwinkelungen 10 und 12 sind gegen die Endplattenbereiche 9 und 13 unter einem Winkel von 20° bis 30°, vorzugsweise unter 25°, abgewinkelt, wodurch sich für den Kupplungsaufnahmebereich 11 eine Winkelstellung von 50° bis 75°, vorzugsweise 65° gegen den Endbereich 9 ergibt. Diese Abwinkelung ergibt für die Montage der Lichtwellenleiter-Kupplung eine Achsrichtung, die eine problemlose Ein- und Ausführung der zu kuppelnden Lichtwellenleiter-Stecker, insbesondere von oben her für die anzuschließenden Lichtwellenleiter-Anschlußleitungen zuläßt.

Figur 4 zeigt in einer Draufsicht auf die Einsatzplatte 8, daß auch die Abwinkelungen, das heißt die Abwinkelkanten 20 schräg zur Mittelachse M verlaufen und zwar um einen Winkel von 5° bis 15°, vorzugsweise 10°, abweichend von der Mittelachse M. Dadurch wird erreicht, daß die eingeführten Lichtwellenleiter von der Kabeleinführung bis zu den Kabelauslässen der Geräteeinbaueinheit ebenfalls möglichst geradlinig verlaufen können. Ansonsten ergeben sich gegenüber Figur 2 keine neuen Erkenntnisse.

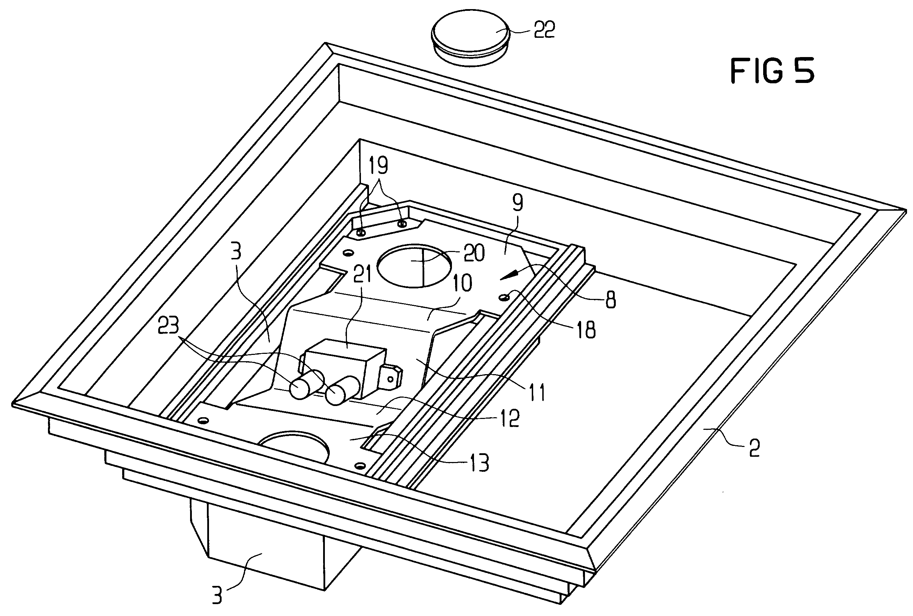

In Figur 5 ist der Einbau der Einsatzplatte 8 im Geräteträger 3 einer Geräteeinheit 2 dargestellt. Daraus ist ersichtlich, daß der Kupplungsaufnahmebereich 11 bereits mit der Lichtwellenleiter-Kupplung 21 bestückt ist und daß die angedeuteten Lichtwellenleiter-Stecker 23 den Erfordernissen gemäß schräg nach oben weisen, so daß sie montagefreundlich ein- und aussteckbar sind. Nicht sichtbar sind in der Verlängerung nach unten bereits vor der Montage der Einsatzplatte 8 die Stecker des verlegten Lichtwellenleiter-Kabels in die rückseitige Kupplungshälfte eingeführt worden. Außerdem wird deutlich, daß durch die schrägen Abwinkelungen der gerade Verlauf der Lichtwellenleiter von der in der linken Ecke der Geräteeinbaueinheit 2 angeordneten Kabeleinführung mit der von oben zu bedienenden Kabelabfangvorrichtung 19 bis zu den in der Mitte liegenden, hier nicht sichtbaren Kabelauslässen des Deckels gewährleistet ist. Durch das Sichtfenster 20, das später mit einem Stopfen 22 verschlossen wird, kann die Betätigung der Kabelabfangvorrichtung 19 und der Verlauf der eingeführten Lichtwellenleiter verfolgt werden.

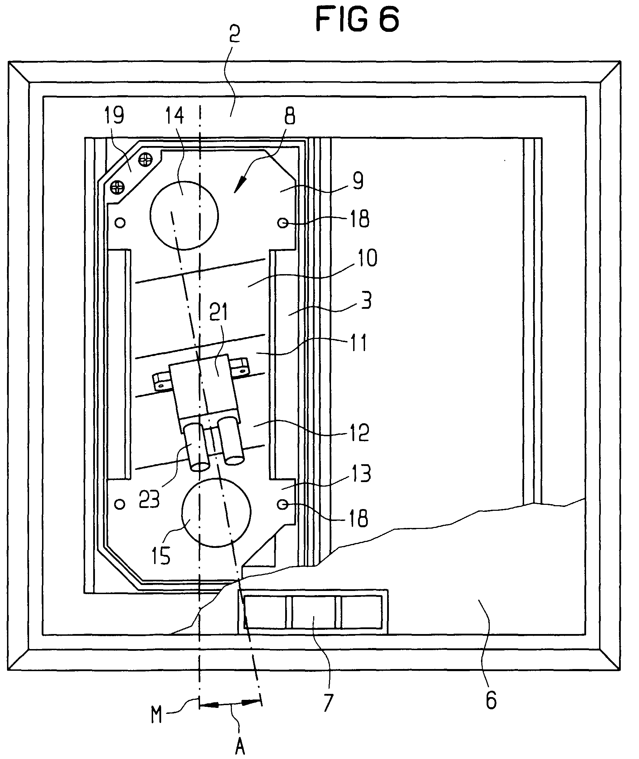

In Figur 6 wird in der Draufsicht besonders die von der Mittelachse M der Einsatzplatten 8 seitlich unter dem Winkel A abweichende Achsenverlauf der Lichtwellenleiter-Kupplung deutlich. Dies wird dadurch erreicht, daß die Abwinkelungskanten 20 zwischen den Ausgleichsabwinkelungen 10 bzw. 12 und den Endplattenbereichen 9 bzw. 13 sowie die Abwinkelungskanten 20 zwischen den Ausgleichsabwinkelungen 10 bzw. 12 und dem Kupplungsaufnahmebereich 11 schräg verlaufen und zwar unter einem Winkel von 5° bis 15°, vorzugsweise von 10°, zur Mittellinie M der Einsatzplatte 8, wie oben bereits erläutert wurde. Auf diese Weise wird ein unkritischer Verlauf der Lichtwellenleiter von der Kabelabfangvorrichtung 19 zu den in der Mitte des Deckels 6 liegenden Kabelauslässen 7 gewährleistet. Die Einsatzplatte 8 wird durch Einsetzen von Schrauben in den Bohrungen 18 an dem darunter liegenden Geräteträger 3 befestigt.

## Patentansprüche

1. Einsatz für Lichtwellenleiter-Anschlüsse in einer Gerätebaueinheit, die in einer Unterflurdose eines Unterflursystems angeordnet ist,
**dadurch gekennzeichnet,**
daß eine Lichtwellenleiter-Kupplung (21) für Lichtwellenleiter-Stecker (23) auf einer mehrfach abgewinkelten Einsatzplatte (8) angeordnet ist, daß die beiden Endplattenbereiche (9, 13) in einer Ebene verlaufen, mit Bohrungen (18) zur Befestigung in einem Geräteträger (3) der Gerätebaueinheit (2) und mit Sichtfenstern (14, 15) versehen sind, daß anschließend an jedem Endplattenbereich (9, 13) je eine Ausgleichsabwinkelung (10, 12) angesetzt ist und daß zwischen den beiden Ausgleichsabwinkelungen (10, 12) ein Kupplungsaufnahmebereich (11) mit einem Ausschnitt (16) für den Einsatz der Lichtwellenleiter-Kupplung (21) unter einem Winkel (W) zum Endplattenbereich (9) so abgewinkelt ist, daß die Achse der Lichtwellenleiter-Kupplung (21) schräg nach oben aus der Gerätebaueinheit (2) verläuft.

2. Einsatz nach Anspruch 1,
**dadurch gekennzeichnet,**
daß der Winkel (B) zwischen der Ebene des Endplattenbereiches (9) und dem Kupplungsaufnahmebereich (11) vorzugsweise 50° bis 75°, vorzugsweise 65° beträgt.

3. Einsatz nach einem der vorhergehenden Ansprüche,
**dadurch gekennzeichnet,**
daß die Ausgleichsabwinkelungen (10, 12) unter einem Winkel (C) zwischen 20° und 30°, vorzugsweise 25°, von den Endplattenbereichen (9, 13) abgewinkelt sind.

4. Einsatz nach einem der vorhergehenden Ansprüche,
**dadurch gekennzeichnet,**
daß die Abwinkelungskanten (20) zwischen den Ausgleichsabwinkelungen (10, 12) und den Endplattenbereichen (9, 13) sowie die Abwinkelungskante (20) zwischen den Ausgleichsabwinkelungen (10, 12) und dem Kupplungsaufnahmebereich (11) unter einem Winkel (A) von 5° bis 15°, vorzugsweise 10°, zur Mittellinie (M) der Einsatzplatte (8) verlaufen.

5. Einsatz nach einem der vorhergehenden Ansprüche,
**dadurch gekennzeichnet,**
daß die Kabelabfangvorrichtung (19) im Geräteträger (3) von oben nach dem Einbau der Einsatzplatte (8) aktivierbar ist.

6. Einsatz nach einem der vorhergehenden Ansprüche,
**dadurch gekennzeichnet,**
daß die Lichtwellenleiter-Kupplung (21) aufnahmen für zwei Steckerpaare (23) aufweist.

7. Einsatz nach einem der vorhergehenden Ansprüche,
**dadurch gekennzeichnet,**
daß die Sichtfenster (20) mit Stopfen (22) verschließbar sind.

8. Einsatz nach einem der vorhergehenden Ansprüche,
**dadurch gekennzeichnet,**
daß der Deckel (6) der Gerätebaueinheit (2) ausbrechbare Kabelauslässe (7) aufweist.
